# EUROPEAN PATENT SPECIFICATION

(11) **EP 4 432 421 B1**
(45) Date of publication and mention of the grant of the patent: **18.02.2026**
(21) Application number: 23872739.0
(22) Date of filing: 19.07.2023
(51) Int. Cl.: H01M 10/42, G01N 1/22

(54) **GAS COLLECTION DEVICE**
GASSAMMELVORRICHTUNG
DISPOSITIF DE COLLECTE DE GAZ

(30) Priority: 26.09.2022 KR 20220121422
(43) Date of publication of application: 18.09.2024
(73) Proprietor: LG Energy Solution, Ltd., Seoul 07335 (KR)
(72) Inventor: PARK, Kwangyeon, Daejeon 34122 (KR); CHOI, Nak Hee, Daejeon 34122 (KR); HWANG, Dongguk, Daejeon 34122 (KR); KIM, Kyung Min, Daejeon 34122 (KR)
(74) Representative: Goddar, Heinz J.
(86) International application number: PCT/KR2023/010383
(87) International publication number: WO 2024/071614

(56) References cited:
- KR-A- 20190 132 906
- KR-A- 20210 054 703
- KR-A- 20210 125 283
- KR-A- 20220 039 153
- KR-B1- 102 268 398

## Description

### Technical Field

The present application claims the benefit of priority based on Korean Patent Application No. 10-2022-0121422 filed on September 26, 2022.

The present disclosure relates to a gas collecting apparatus, and particularly to a gas collecting apparatus capable of accurately and stably delivering collected gas to a gas analysis apparatus by automating loading, unloading, and punching of a battery.

### Background Art

In general, a secondary battery is a battery which can be used repeatedly through a discharging process in which chemical energy is converted into electrical energy and a charging process in the opposite direction to the discharging process and which includes nickelcadmium (Ni-Cd) batteries, nickel-metal hydride (Ni-MH) batteries, lithium-metal batteries, lithium-ion (Li-ion) batteries, and lithium-ion polymer batteries. Among these secondary batteries, lithium secondary batteries having high energy density and voltage, long cycle life, and a low self-discharge rate have been commercialized and widely used.

Depending on the reaction within the lithium secondary battery, various types of gases such as hydrogen, oxygen, nitrogen, carbon monoxide, carbon dioxide, hydrocarbons of CₙH₂ₙ₋₂ (n=2~5), CₙH₂ₙ (n=2~5), CₙH₂ₙ₊₂ (n=1~5), and other organic gas species, may be generated.

In addition, the lithium secondary battery degrades while generating a large amount of gas due to electrolyte decomposition as repeated charging and discharging progresses, and this aspect appears differently depending on the design and use form of the battery. Therefore, it is essential to infer a deterioration mechanism of a battery by analyzing gas generated inside the battery during a battery development process.

Therefore, it is very important to collect and accurately analyze the gas generated in the secondary battery. Various gases are generated during the operation of lithium ion batteries, and information on the composition and content of generated gases is useful for developing battery materials, optimizing battery manufacturing processes, and identifying causes of battery defects. To this end, it is important to develop a technology to collect the gas generated inside the secondary battery.

As a method for collecting gas generated inside a secondary battery, a method in which, when a battery is accommodated in a diffusion chamber with an airtight space formed therein, an opening for gas discharge is formed in the battery case, and then the gas discharged through the opening is diffused into the diffusion chamber, the diffused gas is collected in a separate gas collecting container is used. For high-concentration gas collection, it may be most desirable that there is no clearance between the battery and the inner space of the diffusion chamber.

Recently, batteries are used in a wide range of industrial fields, and depending on various battery application environments and conditions, performance required for batteries also varies, and batteries can be designed in various specifications.

Conventionally, in order to design various batteries, it was difficult to newly manufacture or install each time a battery model is changed by individually using a diffusion chamber for gas collection according to the size of the battery.

In addition, the concentration of the gas delivered to an analyzer or stored in the gas collecting container varies greatly depending on the volume of the diffusion chamber, the size of the battery (target to be analyzed), and the amount of gas generated, which affects the analysis result.

In addition, since the loading and unloading of the battery and punching are performed manually, the working time for gas collection was long and human error existed, and in particular, internal short circuit and dangerous accidents could occur during punching.

There is a need for a gas collection technology that solves the above problems and is precisely and stably automated.

KR 2019 0132906 A describes an apparatus for collecting generated gas of a secondary battery used for charging and discharging. The apparatus comprises a jig which is a cylindrical jig for mounting a cylindrical secondary battery, including a jig body part having outer and inner circumferential surfaces, an upper jig part positioned on an upper portion of the jig body part, and forming a space for mounting the cylindrical secondary battery together with the jig body part, and a lower jig part positioned at a lower portion of the jig body part, and forming a space for mounting the cylindrical secondary battery with the jig body part; a punching part provided at an upper portion of the upper jig part, and forming a groove in the cylindrical secondary battery; a connection part for connecting gas diffused from the cylindrical secondary battery to an acceptable manifold part, a collecting tube, or a gas analyzing device at a side surface of the jig body part; and charging and discharging terminals electrically connected to the cylindrical secondary battery. The cylindrical secondary battery may have a discharge capacity in the range of 1,000 to 5,000 mAh.

### Disclosure of the Invention

### Technical Goals

The present invention is defined by the subject matter of the appended independent claim 1. Particular embodiments are given by the additional features of the appended dependent claims.

The present disclosure relates to a gas collecting apparatus, and is to provide a gas collecting apparatus capable of accurately and stably delivering collected gas to a gas analysis apparatus by automating loading, unloading, and punching of a battery.

Technical objects to be achieved by the present disclosure are not limited to the technical objects mentioned above, and other technical objects not mentioned will be clearly understood by those skilled in the art from the description below.

### Advantageous Effects

A gas collecting apparatus of the present disclosure may be capable of precise and rapid gas collection by automating replacement of a jig unit, loading and unloading of a battery, and punching.

The gas collecting apparatus of the present disclosure may determine whether punching is completed by measuring movement of a punching needle and an amount of pressure change, thereby preventing accidents such as an internal short circuit of the battery and ensuring safety during gas collection.

### Brief Description of Drawings

FIG. 1 is a cross-sectional view illustrating a gas collecting apparatus according of the present disclosure.
FIG. 2 is an enlarged cross-sectional view of a local region of FIG. 1.
FIGS. 3a and 3b are cross-sectional views illustrating a jig unit.
FIG. 4 is a perspective view illustrating a battery storage unit.
FIG. 5 is a cross-sectional view illustrating a battery storage unit.
FIG. 6 is a conceptual diagram illustrating movement of a jig unit.
FIG. 7 is a cross-sectional view illustrating a first driving unit.
FIG. 8 is a cross-sectional view illustrating a second driving unit.

### Best Mode for Carrying Out the Invention

A gas collecting apparatus of the present disclosure includes
a jig unit in which a cylindrical battery is mounted;
a boat unit on which the jig unit in which the cylindrical battery is mounted is mounted;
a chamber body unit provided with a battery accommodating space in which the boat unit is accommodated inside and having an opening formed at one end;
a chamber cap unit coupled to the one end of the chamber body unit so that one side covers the opening;
a first driving unit configured to move the boat unit into the battery accommodating space through the opening;
a second driving unit configured to closely contact or separate the one end of the chamber body unit and the one side of the chamber cap unit each other; and
a gas delivery flow path connected to the chamber body unit to deliver analysis target gas diffused in the battery accommodating space to a gas analysis unit.

In the gas collecting apparatus of the present disclosure, when a longitudinal direction of the cylindrical battery is referred to as a first direction, the chamber body unit extends in the first direction, the opening is formed at the one end of the chamber body unit in the first direction, the boat unit moves linearly in the first direction by the first driving unit, a punching needle is provided on the one side of the chamber cap unit at a location facing the cylindrical battery, and the first driving unit moves the boat unit toward the chamber cap unit to form a perforated hole in the cylindrical battery by the punching needle.

In the gas collecting apparatus of the present disclosure, the jig unit may be provided in a cylindrical shape extending in the first direction, the cylindrical battery may be mounted in the jig unit so that an outer circumferential surface of the cylindrical battery is in close contact with an inner circumferential surface of the jig unit, and a needle insertion hole may be formed at one end in the first direction of the jig unit.

In the gas collecting apparatus of the present disclosure, an electrolyte storage groove may be formed on the inner circumferential surface of the jig unit, and the electrolyte storage groove may be located adjacent to a side wall where the needle insertion hole is located in an inner space of the jig unit.

In the gas collecting apparatus of the present disclosure,
a plurality of the jig units may be provided, and one cylindrical battery may be mounted in each of the plurality of jig units, and the gas collecting apparatus may further include: a battery storage unit in which the plurality of jig units are accommodated; and
a battery delivery unit configured to sequentially deliver the plurality of jig units from the battery storage unit to the boat unit one by one.

In the gas collecting apparatus of the present disclosure, a first cylindrical battery may be mounted in a part of the plurality of jig units and a second cylindrical battery may be mounted in another part of the plurality of jig units, wherein the first cylindrical battery and the second cylindrical battery may be formed with different outer diameters, and the plurality of jig units may be all provided with the same outer diameter.

In the gas collecting apparatus of the present disclosure, the battery storage unit may include a battery storage track in which the plurality of jig units are stored in an aligned state, a battery discharge hole formed at one end of the battery storage track to discharge the plurality of jig units one by one, and an elastic door mounted on an edge of an inlet of the battery discharge hole to prevent the plurality of jig units from being separated from the battery storage unit with a restoring force, wherein the boat unit may move between an outer space of the chamber body unit and the battery accommodating space by the first driving unit, and the inlet of the battery discharge hole may be provided at a location spaced apart from the boat unit by a predetermined distance so as to face the boat unit in a state of being located in the outer space of the chamber body unit.

In the gas collecting apparatus of the present disclosure, the battery delivery unit may include a gripper configured to grip one jig unit exposed to the battery discharge hole among the plurality of jig units, a rotating member having one end to which the gripper is mounted and extending in a second direction perpendicular to the first direction, and a shaft member which is located between the battery discharge hole and the boat unit in the state of being located in the outer space of the chamber body unit and extends in the first direction, wherein the shaft member may be coupled with the rotating member, and the rotating member may rotate with respect to the shaft member serving as a rotation shaft.

In the gas collecting apparatus of the present disclosure, the first driving unit may include a power transmission bar extending in the first direction and penetrating the other end of the chamber body unit in the first direction to have one end inserted inside the chamber body unit, a moving member, wherein the boat unit is coupled to one side of the moving member and the one end of the power transmission bar is coupled to the other side of the moving member, a first fixing frame to which the chamber body unit is fixed, a first moving frame to which the power transmission bar is fixed and linearly moving in the first direction based on the first fixing frame, a shaft screwed with the first moving frame and coupled to the first fixing frame to be capable of idling, and an electric motor configured to rotate the first shaft.

In the gas collecting apparatus of the present disclosure, a sealing cover surrounding the power transmission bar may be provided inside the chamber body unit, and one end of the sealing cover may be fused to the other side of the moving member and the other end of the sealing cover may be fused to an inner wall of the other end side of the chamber body unit.

In the gas collecting apparatus of the present disclosure, the sealing cover may be provided in a form of bellows.

In the gas collecting apparatus of the present disclosure, the second driving unit may include a second moving frame to which the first fixing frame is fixed, a second fixing frame to which the chamber cap unit is fixed, and a pneumatic actuator configured to move the second moving frame in the first direction based on the second fixing frame.

The gas collecting apparatus of the present disclosure may further include a pressure sensor unit connected to the gas delivery flow path, wherein the pressure sensor unit may be configured to measure a pressure of the battery accommodating space.

The gas collecting apparatus of the present disclosure may further include a controller configured to control the first driving unit, wherein the controller may be controlled based on a pressure measured value output from the pressure sensor unit.

The gas collecting apparatus of the present disclosure may further include
a manifold provided in the gas delivery flow path;
a dilution tank connected to the manifold by a flow path;
a vacuum pump connected to the manifold by a flow path;
a first valve configured to open or block a flow path connecting the manifold and the body unit;
a second valve configured to open or block a flow path connecting the manifold and the gas analysis unit;
a third valve configured to open or block the flow path connecting the manifold and the dilution tank; and
a fourth valve configured to open or block the flow path connecting the manifold and the vacuum pump,
wherein the controller may be configured to control the first valve, the second valve, the third valve, and the fourth valve based on a signal transmitted to the gas analysis unit.

### Modes for Carrying Out the Invention

Hereinafter, embodiments according to the present disclosure will be described in detail with reference to the accompanying drawings. In this process, the size or shape of the components shown in the drawings may be exaggerated for clarity and convenience of explanation. In addition, terms specifically defined in consideration of the configuration and operation of the present disclosure may vary according to the intentions or customs of users and operators. Definitions of these terms should be made based on the content throughout this specification.

In the description of the present disclosure, it should be noted that the orientation or positional relationship indicated by the terms "center", "upper", "lower", "left", "right", "vertical", "horizontal", "inner side", "outer side", "one surface", "other surface" is based on the orientation or positional relationship shown in the drawing or the orientation or positional relationship normally arranged when using the product of the present disclosure, and it is intended only for explanation and brief description of the present disclosure, and is not to be construed as limiting the present disclosure as it does not suggest or imply that the device or element shown must necessarily be configured or operated in a specific orientation with a specific orientation.

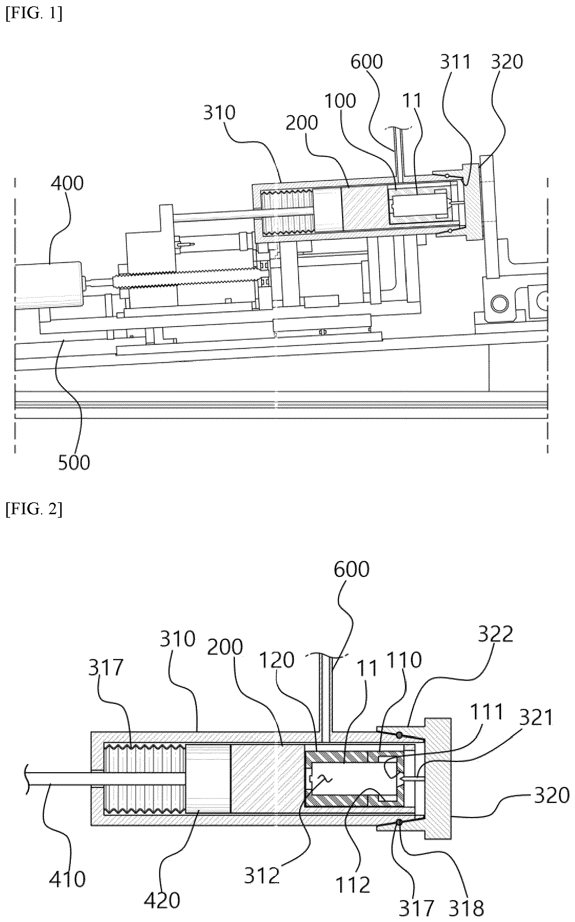

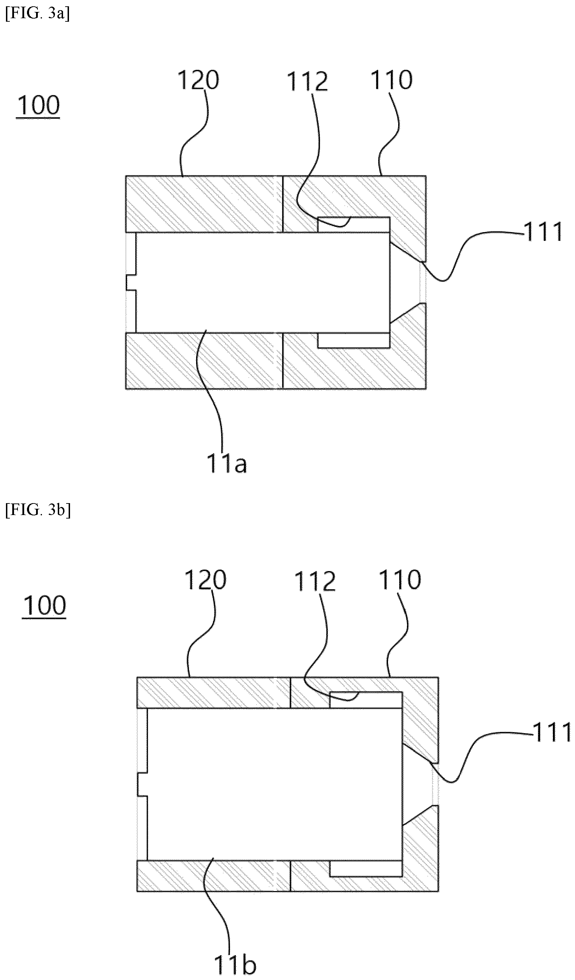

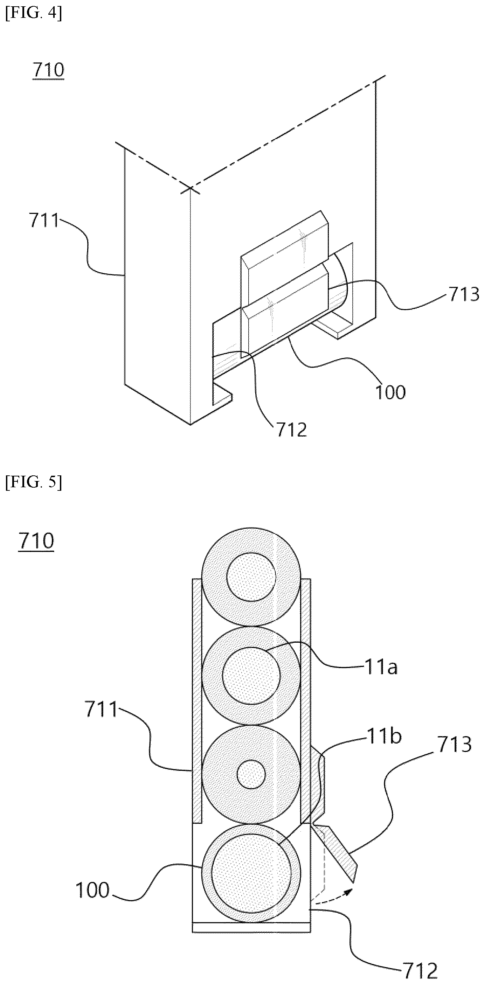

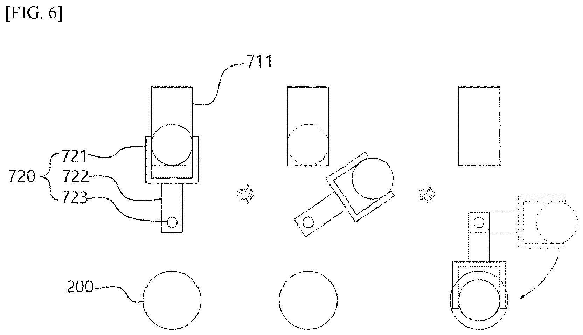

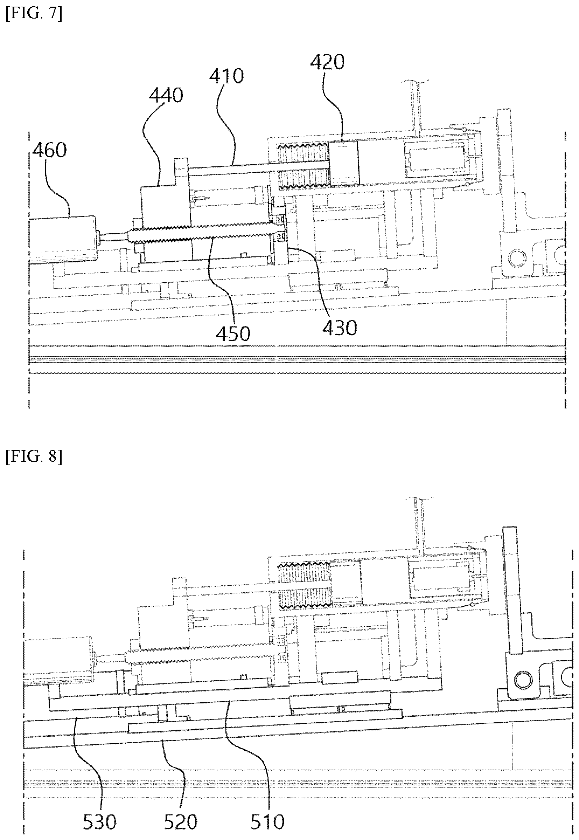

FIG. 1 is a cross-sectional view illustrating a gas collecting apparatus according of the present disclosure. FIG. 2 is an enlarged cross-sectional view of a local region of FIG. 1. FIGS. 3a and 3b are cross-sectional views illustrating a jig unit 100. FIG. 4 is a perspective view illustrating a battery storage unit 710. FIG. 5 is a cross-sectional view illustrating a battery storage unit 710. FIG. 6 is a conceptual diagram illustrating movement of the jig unit 100. FIG. 7 is a cross-sectional view illustrating a first driving unit. FIG. 8 is a cross-sectional view illustrating a second driving unit 500.

The gas collecting apparatus of the present disclosure is specialized for collecting gas generated inside the cylindrical battery 11, and may automate most processes for gas collection, such as loading of the battery, perforating of the battery, gas collection, gas delivery, and unloading of the battery.

Since the gas collecting apparatus of the present disclosure skips the process of storing the gas generated in the battery in a separate collection container and directly delivers it to the gas analysis unit, it may be capable of real-time analysis as well as preventing phenomena such as deterioration, leakage, and phase change of gas.

Since the gas collecting apparatus of the present disclosure provides almost the same gas diffusion space for the cylindrical battery 11 of various specifications, it may be advantageous for quantitative analysis.

The cylindrical battery 11, which is a gas collection target of the gas collecting apparatus of the present disclosure, may accommodate an electrode assembly inside a cylindrical housing made of a rigid material.

The gas collecting apparatus of the present disclosure may extract gas from the cylindrical battery 11 with an automated system and deliver to the gas analysis unit. The gas analysis unit which is to be a gas delivery target may be, for example, a GC-MS device.

As shown in FIG. 1, the gas collecting apparatus of the present disclosure may include
a jig unit 100 in which a cylindrical battery 11 is mounted;
a boat unit 200 on which the jig unit 100 in which the cylindrical battery 11 is mounted is mounted;
a chamber body unit 310 provided with a battery accommodating space 312 in which the boat unit 200 is accommodated inside and having an opening 311 formed at one end;
a chamber cap unit 320 coupled to the one end of the chamber body unit 310 so that one side covers the opening 311;
a first driving unit configured to move the boat unit 200 into the battery accommodating space 312 through the opening 311;
a second driving unit 500 configured to closely contact or separate the one end of the chamber body unit 310 and the one side of the chamber cap unit 320 each other; and
a gas delivery flow path 600 connected to the chamber body unit 310 to deliver analysis target gas diffused in the battery accommodating space 312 to a gas analysis unit.

As shown in FIG. 2, in the gas collecting apparatus of the present disclosure, when a longitudinal direction of the cylindrical battery 11 is referred to as a first direction, the chamber body unit 310 may extend in the first direction, the opening 311 may be formed at the one end of the chamber body unit 310 in the first direction, and the boat unit 200 may move linearly in the first direction by the first driving unit. For example, the chamber body unit 310 may be provided in a cylindrical shape with the first direction as a central axis. The first direction may be perpendicular to the direction of gravity or a direction forming an acute angle with the direction of gravity. When the first direction forms an acute angle with the direction of gravity, one end of the chamber body unit 310 where the opening 311 is formed may be located at a higher location than the other end with respect to the direction of gravity. In other words, in the cylindrical battery 11, the perforated end is formed higher than the non-perforated end, so that the chamber cap unit 320 and the punching needle 321 located in the chamber cap unit 320 are prevented from being contaminated with the electrolyte. In addition, as described above, the first direction is formed to be inclined with respect to the direction of gravity (not perpendicular to the direction of gravity), so that even if the electrolyte leaks from the cylindrical battery 11, the leaked electrolyte is stored in the electrolyte storage groove 112 of the jig unit 100 to be described later, and the leaked electrolyte can be removed from the apparatus together when the jig unit 100 is unloaded.

The boat unit 200 may be made of a chemical resistant insulating material.

The inner space of the chamber body unit 310 may also be provided in a cylindrical shape with the first direction as a central axis. The opening 311 may be formed in a circular shape, and the center of the opening 311 and the central axis of the inner space of the chamber body unit 310 may coincide.

The outer circumferential surface of the chamber body unit 310 at one end side of the chamber body unit 310 may be formed in a tapered shape in which the outer diameter decreases as it approaches one end of the chamber body unit 310. A ring-shaped groove 318 into which a sealing member 317 such as an O-ring can be inserted may be formed in a region provided in a tapered shape among the outer circumferential surface of the chamber body unit 310.

A punching needle 321 may be provided on the one side of the chamber cap unit 320 at a location facing the cylindrical battery 11, and the first driving unit may move the boat unit 200 toward the chamber cap unit 320 side to form a perforated hole in the cylindrical battery 11 by the punching needle 321.

The chamber cap unit 320 may be provided in a disk shape. The punching needle 321 may be located at the center of the chamber cap unit 320, and the center of the chamber cap unit 320 and the center of the opening 311 may be located on a straight line coincident with the central axis of the cylindrical space formed inside the chamber body unit 310.

On one side of the chamber cap unit 320, a cylindrical sealing frame 322 into which one end of the chamber body unit 310 can be inserted may be formed. The inner circumferential surface of the sealing frame 322 may be provided in a tapered shape in which the inner diameter increases as it approaches the chamber body unit 310. The sealing frame 322 may cover the tapered region of the outer circumferential surface of the chamber body unit 310 when the chamber cap unit 320 and the chamber body unit 310 are coupled.

As shown in FIG. 2, the jig unit 100 may be provided in a cylindrical shape extending in the first direction, the cylindrical battery 11 may be mounted in the jig unit 100 so that an outer circumferential surface of the cylindrical battery 11 is in close contact with an inner circumferential surface of the jig unit 100, and a needle insertion hole 111 may be formed at one end in the first direction of the jig unit 100.

The needle insertion hole 111 may also be located on a straight line where the center of the chamber cap unit 320 and the center of the opening 311 are located.

The jig unit 100 may include a first jig 110 covering one end of the cylindrical battery 11 and a second jig 120 covering the other end of the cylindrical battery 11. In other words, the jig unit 100 may be formed of two jigs respectively inserted into both ends of the cylindrical battery 11.

An electrolyte storage groove 112 may be formed on the inner circumferential surface of the jig unit 100, and the electrolyte storage groove 112 may be located adjacent to a side wall where the needle insertion hole 111 is located in an inner space of the jig unit 100. The electrolyte storage groove 112 may be formed in a ring shape along the inner circumferential surface of the jig unit 100.

As shown in FIGS. 3a and 3b, the width and depth of the electrolyte storage groove 112 may be determined in consideration of electrolyte injected into the cylindrical battery 11 mounted in the jig unit 100. The depth of the electrolyte storage groove 112 may be formed to be 10% to 30% of the outer diameter of the cylindrical battery 11. More preferably, the depth of the electrolyte storage groove 112 may be formed to be 15% to 25% of the outer diameter of the cylindrical battery 11. For example, the depth of the electrolyte storage groove 112 may be formed to be 20% of the outer diameter of the cylindrical battery 11.

In the gas collecting apparatus of the present disclosure, a plurality of the jig units 100 may be provided, and one cylindrical battery 11 may be mounted in each of the plurality of jig units 100. Specifically, the gas collecting apparatus of the present disclosure may sequentially collect gas with an automated system for a plurality of cylindrical batteries 11, and at this time, the jig unit 100 may be individually assigned to each cylindrical battery 11.

As shown in FIGS. 4 to 6, for automated battery input, the gas collecting apparatus of the present disclosure may further include a battery storage unit 710 in which the plurality of jig units 100 are accommodated; and a battery delivery unit 720 configured to sequentially deliver the plurality of jig units from the battery storage unit to the boat unit 200 one by one.

As shown in FIG. 5, a first cylindrical battery 11a may be mounted in a part of the plurality of jig units 100 and a second cylindrical battery 11b may be mounted in another part of the plurality of jig units 100, and the first cylindrical battery 11a and the second cylindrical battery 11b are formed with different outer diameters and the plurality of jig units 100 may be all provided with the same outer diameter. In other words, the gas collecting apparatus of the present disclosure may include various types of jig units 100 having inner spaces corresponding to cylindrical batteries 11 of various specifications, and by having a plurality of jig units 100 having different shapes and sizes of inner spaces have the same external shape, the entire gas collecting process can be equally applied to cylindrical batteries 11 of various specifications.

As shown in FIGS. 4 and 5, the battery storage unit 710 may include a battery storage track 711 in which the plurality of jig units 100 are stored in an aligned state, a battery discharge hole 712 formed at one end of the battery storage track 711 to discharge the plurality of jig units 100 one by one, and an elastic door 713 mounted on an edge of an inlet of the battery discharge hole 712 to prevent the plurality of jig units 100 from being separated from the battery storage unit 710 with a restoring force.

In the gas collecting apparatus of the present disclosure, the boat unit 200 moves between an outer space of the chamber body unit 310 and the battery accommodating space 312 by the first driving unit, wherein the inlet of the battery discharge hole 712 may be provided at a location spaced apart from the boat unit 200 by a predetermined distance so as to face the boat unit 200 in a state of being located in the outer space of the chamber body unit 310. In other words, in a state where the boat unit 200 is taken out from the chamber body unit 310, the boat unit 200 and the battery discharge hole 712 may be disposed at locations spaced apart from each other by a predetermined distance in a second direction perpendicular to the first direction.

As shown in FIG. 6, the battery delivery unit 720 may include a gripper 721 configured to grip one jig unit 100 exposed to the battery discharge hole 712 among the plurality of jig units 100, a rotating member 722 having one end to which the gripper 721 is mounted and extending in a second direction perpendicular to the first direction, and a shaft member 723 which is located between the battery discharge hole 712 and the boat unit 200 in the state of being located in the outer space of the chamber body unit 310 and extends in the first direction, wherein the shaft member 723 may be coupled with the rotating member 722, and the rotating member 722 may rotate with respect to the shaft member 723 serving as a rotation shaft.

As the shaft member 723 rotates, the gripper 721 applies a force greater than the restoring force by which the elastic door 713 fixes the jig unit 100 to the jig unit 100 to take the jig unit 100 out of the battery storage track 711, and the jig unit 100 may be seated on the boat unit 200 while the shaft member 723 continues to rotate.

As shown in FIG. 7, the first driving unit may include a power transmission bar 410 extending in the first direction and penetrating the other end of the chamber body unit 310 in the first direction to have one end inserted inside the chamber body unit 310, a moving member 420, the boat unit 200 being coupled to one side of the moving member 420 and the one end of the power transmission bar 410 being coupled to the other side of the moving member 420, a first fixing frame 430 to which the chamber body unit 310 is fixed, a first moving frame 440 to which the power transmission bar 410 is fixed and linearly moving in the first direction based on the first fixing frame 430, a shaft 450 screwed with the first moving frame 440 and coupled to the first fixing frame 430 to be capable of idling, and an electric motor 460 configured to rotate the first shaft 450.

As described above, the first driving unit is provided in a structure that converts the rotational force of the electric motor 460 into linear motion, so that the distance between the cylindrical battery 11 and the punching needle 321 can be precisely controlled. In addition, an encoder is mounted on the electric motor 460, and the measured distance between the cylindrical battery 11 and the punching needle 321 can be input as a signal of the encoder to the controller that controls the first driving unit.

A sealing cover 317 surrounding the power transmission bar 410 may be provided inside the chamber body unit 310, and one end of the sealing cover 317 may be fused to the other side of the moving member 420 and the other end of the sealing cover 317 may be fused to an inner wall of the other end side of the chamber body unit 310.

The moving member 420 is a chemical-resistant metal material and may be coupled by welding a sealing cover 317 made of a metal material.

The inner space of the chamber body unit 310 is divided into two spaces around the moving member 420, and a space facing one side of the moving member 420 may be the battery accommodating space 312.

The sealing cover 317 may be provided in a form of bellows. More specifically, the sealing cover 317 may have a form of bellows made of metal.

As shown in FIG. 8, the second driving unit 500 may include a second moving frame 510 to which the first fixing frame 430 is fixed, a second fixing frame 520 to which the chamber cap unit 320 is fixed, and a pneumatic actuator 530 configured to move the second moving frame 510 in the first direction based on the second fixing frame 520. **In** other words, the second driving unit 500 may move the entire chamber body unit 310. The second driving unit 500 may enhance airtightness by maintaining continuous pressurization during gas collection by coupling the chamber body unit 310 and the chamber cap unit 320 with the power of the pneumatic actuator 530.

The gas collecting apparatus of the present disclosure may further include an air spraying unit (not shown) located to face the punching needle 321 provided in the chamber cap unit 320 and configured to spray high-pressure gas to the punching needle 321. By the second driving unit 500, the chamber body unit 310 can be completely retracted so as not to be located on an imaginary straight line connecting the punching needle 321 and the nozzle of the air spraying unit. When the chamber body unit 310 is completely separated from the chamber cap unit 320 by the second driving unit 500, the punching needle 321 may be cleaned by spraying high-pressure gas toward the punching needle 321 from a nozzle of the air spraying unit. The high-pressure gas sprayed by the air spraying unit may be high-pressure air or an inert gas as a gas for purging. The air spraying unit may clean the chamber cap unit 320 contaminated with electrolyte by spraying high-pressure gas to the chamber cap unit 320 for several seconds.

The gas collecting apparatus of the present disclosure may further include a pressure sensor unit connected to the gas delivery flow path 600, wherein the pressure sensor unit may be configured to measure a pressure of the battery accommodating space 312.

The gas collecting apparatus of the present disclosure may further include a controller configured to control the first driving unit, wherein the controller may be controlled based on a pressure measured value output from the pressure sensor unit. Specifically, when the pressure measured by the pressure sensor unit is equal to or greater than the set pressure value, the controller may drive the first driving unit to cause the punching needle 321 to retreat from the cylindrical battery 11. The set pressure value may be determined in consideration of the type of cylindrical battery 11, charge/discharge state, number of cycles, temperature, and the like.

The gas collecting apparatus of the present disclosure may further include
a manifold provided in the gas delivery flow path 600;
a dilution tank connected to the manifold by a flow path;
a vacuum pump connected to the manifold by a flow path;
a first valve configured to open or block a flow path connecting the manifold and the body unit;
a second valve configured to open or block a flow path connecting the manifold and the gas analysis unit;
a third valve configured to open or block the flow path connecting the manifold and the dilution tank; and
a fourth valve configured to open or block the flow path connecting the manifold and the vacuum pump.

The controller may be configured to control the first valve, the second valve, the third valve, and the fourth valve based on a signal transmitted to the gas analysis unit. Specifically, each valve may be controlled according to a process sequence by receiving information on a gas analysis process.

Although embodiments according to the present disclosure have been described above, they are only illustrative and those skilled in the art will understand that various modifications and embodiments of equivalent range are possible therefrom. Therefore, the true technical protection scope of the present disclosure should be defined by the following claims.

<Explanation of Symbols> 11...cylindrical battery, 11a...First cylindrical battery, 11b...Second cylindrical battery, 100...Jig unit, 110...First jig, 111...Needle insertion hole, 112...Electrolyte storage groove, 120...Second jig, 200...Boat unit, 310...Chamber body unit, 311...Opening, 312...Battery accommodating space, 317...Sealing cover, 320...Chamber cap unit, 321... Punching needle, 322...Sealing frame, 400...First driving unit, 410...Power transmission bar, 420...Moving member, 430...First fixing frame, 440...First moving frame, 450... Shaft, 460...Electric motor, 500...Second driving unit, 510...Second moving frame, 520...Second fixing frame, 530...Pneumatic actuator, 600...Gas delivery flow path, 710...Battery storage unit, 711...Battery storage track, 712...Battery discharge hole, 713... Elastic door, 720...Battery delivery unit, 721...Gripper, 722...Rotating member, 723... Shaft member

### Industrial Applicability

A gas collecting apparatus of the present disclosure may be capable of precise and rapid gas collection by automating the replacement of a jig unit, loading and unloading of a battery, and punching.

The gas collecting apparatus of the present disclosure may determine whether punching is completed by measuring the movement of the punching needle and the amount of pressure change, thereby preventing accidents such as an internal short circuit of the battery and ensuring safety during gas collection.

## Claims

1. A gas collecting apparatus comprising:
a jig unit (110) in which a cylindrical battery (11) is mounted;
a boat unit (200) on which the jig unit (110) in which the cylindrical battery (11) is mounted is mounted;
a chamber body unit (320) provided with a battery accommodating space (312) in which the boat unit (200) is accommodated inside and having an opening (311) formed at one end;
a chamber cap unit (320) coupled to the one end of the chamber body unit (320) so that one side covers the opening (311);
a first driving unit (400) configured to move the boat unit (200) into the battery accommodating space (312) through the opening (311);
a second driving unit (500) configured to closely contact or separate the one end of the chamber body unit (320) and the one side of the chamber cap unit (320) each other; and
a gas delivery flow path (600) connected to the chamber body unit (320) to deliver analysis target gas diffused in the battery accommodating space (312) to a gas analysis unit,
wherein, when a longitudinal direction of the cylindrical battery (11) is referred to as a first direction,
the chamber body unit (320) extends in the first direction,
the opening (311) is formed at the one end of the chamber body unit (320) in the first direction,
the boat unit (200) moves linearly in the first direction by the first driving unit (400),
a punching needle (321) is provided on the one side of the chamber cap unit (320) at a location facing the cylindrical battery (11), and
the first driving unit (400) moves the boat unit (200) toward the chamber cap unit (320) to form a perforated hole in the cylindrical battery (11) by the punching needle (321).

2. The gas collecting apparatus of claim 1, wherein the jig unit (110) is provided in a cylindrical shape extending in the first direction,
the cylindrical battery (11) is mounted in the jig unit (110) so that an outer circumferential surface of the cylindrical battery (11) is in close contact with an inner circumferential surface of the jig unit (110), and
a needle insertion hole (111) is formed at one end in the first direction of the jig unit (110).

3. The gas collecting apparatus of claim 2, wherein an electrolyte storage groove (112) is formed on the inner circumferential surface of the jig unit (110), and
the electrolyte storage groove (112) is located adjacent to a side wall where the needle insertion hole (111) is located in an inner space of the jig unit (110).

4. The gas collecting apparatus of claim 2, wherein a plurality of the jig units (110) are provided, and
one cylindrical battery (11) is mounted in each of the plurality of jig units (110), and
wherein the gas collecting apparatus further comprises:
a battery storage unit (710) in which the plurality of jig units (110) are accommodated; and
a battery delivery unit (720) configured to sequentially deliver the plurality of jig units (110) from the battery storage unit (710) to the boat unit (200) one by one.

5. The gas collecting apparatus of claim 4, wherein a first cylindrical battery (11) is mounted in a part of the plurality of jig units (110), and
a second cylindrical battery (11) is mounted in another part of the plurality of jig units (110), and
wherein the first cylindrical battery (11) and the second cylindrical battery (11) are formed with different outer diameters, and
the plurality of jig units (110) are all provided with the same outer diameter.

6. The gas collecting apparatus of claim 4, wherein the battery storage unit (710) comprises:
a battery storage track (711) in which the plurality of jig units (110) are stored in an aligned state;
a battery discharge hole (712) formed at one end of the battery storage track (711) to discharge the plurality of jig units (110) one by one; and
an elastic door (713) mounted on an edge of an inlet of the battery discharge hole (712) to prevent the plurality of jig units (110) from being separated from the battery storage unit (710) with a restoring force, and
wherein the boat unit (200) moves between an outer space of the chamber body unit (320) and the battery accommodating space (312) by the first driving unit (400), and
the inlet of the battery discharge hole (712) is provided at a location spaced apart from the boat unit (200) by a predetermined distance so as to face the boat unit (200) in a state of being located in the outer space of the chamber body unit (320).

7. The gas collecting apparatus of claim 6, wherein the battery delivery unit (720) comprises:
a gripper (721) configured to grip one jig unit (110) exposed to the battery discharge hole (712) among the plurality of jig units (110);
a rotating member (722) having one end to which the gripper (721) is mounted and extending in a second direction perpendicular to the first direction; and
a shaft member (723) which is located between the battery discharge hole (712) and the boat unit (200) in the state of being located in the outer space of the chamber body unit (320) and extends in the first direction, and
wherein the shaft member (723) is coupled with the rotating member (722), and
the rotating member (722) rotates with respect to the shaft member (723) serving as a rotation shaft.

8. The gas collecting apparatus of claim 1, wherein the first driving unit (400) comprises:
a power transmission bar (410) extending in the first direction and penetrating the other end of the chamber body unit (320) in the first direction such that one end is inserted inside the chamber body unit (320);
a moving member (420), wherein the boat unit (200) is coupled to one side of the moving member (420) and the one end of the power transmission bar (410) is coupled to the other side of the moving member (420);
a first fixing frame (430) to which the chamber body unit (320) is fixed;
a first moving frame (440) to which the power transmission bar (410) is fixed and linearly moving in the first direction based on the first fixing frame (430);
a shaft (450) screwed with the first moving frame (440) and coupled to the first fixing frame (430) to be capable of idling; and
an electric motor configured to rotate the first shaft (450).

9. The gas collecting apparatus of claim 8, wherein a sealing cover (317) surrounding the power transmission bar (410) is provided inside the chamber body unit (320),
one end of the sealing cover (317) is fused to the other side of the moving member (420), and
the other end of the sealing cover (317) is fused to an inner wall of the other end side of the chamber body unit (320).

10. The gas collecting apparatus of claim 9, wherein the sealing cover (317) is provided in a form of bellows.

11. The gas collecting apparatus of claim 8, wherein the second driving unit (500) comprises:
a second moving frame (510) to which the first fixing frame (430) is fixed;
a second fixing frame (520) to which the chamber cap unit (320) is fixed; and
a pneumatic actuator (530) configured to move the second moving frame (510) in the first direction based on the second fixing frame (520).

12. The gas collecting apparatus of claim 1, further comprising:
the pressure sensor unit connected to the gas delivery flow path (600),
wherein the pressure sensor unit is configured to measure a pressure of the battery accommodating space (312).

13. The gas collecting apparatus of claim 12, further comprising:
a controller configured to control the first driving unit (400),
wherein the controller is controlled based on a pressure measured value output from the pressure sensor unit.

14. The gas collecting apparatus of claim 13, further comprising:
a manifold provided in the gas delivery flow path (600);
a dilution tank connected to the manifold by a flow path;
a vacuum pump connected to the manifold by a flow path;
a first valve configured to open or block a flow path connecting the manifold and the body unit;
a second valve configured to open or block a flow path connecting the manifold and the gas analysis unit;
a third valve configured to open or block the flow path connecting the manifold and the dilution tank; and
a fourth valve configured to open or block the flow path connecting the manifold and the vacuum pump,
wherein the controller is configured to control the first valve, the second valve, the third valve, and the fourth valve based on a signal transmitted to the gas analysis unit.

## Patentansprüche

1. Gassammelvorrichtung aufweisend:
eine Spannvorrichtungseinheit (110), in der eine zylindrische Batterie (11) montiert wird;
eine Schiffseinheit (200), auf der die Spannvorrichtungseinheit (110) montiert ist, in der die zylindrische Batterie (11) montiert wird;
eine Kammerkörpereinheit (320), die mit einem Batterieaufnahmeraum (312) versehen ist, in dem die Schiffseinheit (200) aufgenommen wird, und die eine Öffnung (311) aufweist, die an einem Ende ausgebildet ist;
eine Kammerkappeneinheit (320), die mit dem einen Ende der Kammerkörpereinheit (320) derart gekoppelt ist, dass eine Seite die Öffnung (311) abdeckt;
eine erste Antriebseinheit (400), die konfiguriert ist, um die Schiffseinheit (200) durch die Öffnung (311) in den Batterieaufnahmeraum (312) zu bewegen;
eine zweite Antriebseinheit (500), die konfiguriert ist, um das eine Ende der Kammerkörpereinheit (320) und die eine Seite der Kammerkappeneinheit (320) eng zu berühren oder voneinander zu trennen; und
einen Gaszufuhrströmungsweg (600), der mit der Kammerkörpereinheit (320) verbunden ist, um Analysezielgas, das in dem Batterieaufnahmeraum (312) diffundiert ist, einer Gasanalyseeinheit zuzuführen,
wobei, wenn eine Längsrichtung der zylindrischen Batterie (11) als eine erste Richtung bezeichnet wird,
sich die Kammerkörpereinheit (320) in der ersten Richtung erstreckt,
die Öffnung (311) an dem einen Ende der Kammerkörpereinheit (320) in der ersten Richtung ausgebildet ist,
die Schiffseinheit (200) sich durch die erste Antriebseinheit (400) linear in der ersten Richtung bewegt,
eine Lochungsnadel (321) an der einen Seite der Kammerkappeneinheit (320) an einer Stelle vorgesehen ist, die der zylindrischen Batterie (11) zugewandt ist, und
die erste Antriebseinheit (400) die Schiffseinheit (200) durch die Lochungsnadel (321) in Richtung der Kammerkappeneinheit (320) bewegt, um ein perforiertes Loch in der zylindrischen Batterie (11) zu bilden.

2. Gassammelvorrichtung nach Anspruch 1, wobei die Spannvorrichtungseinheit (110) in einer zylindrischen Form vorgesehen ist, die sich in der ersten Richtung erstreckt,
die zylindrische Batterie (11) so in der Spannvorrichtungseinheit (110) montiert wird, dass eine Außenumfangsfläche der zylindrischen Batterie (11) in engem Kontakt mit einer Innenumfangsfläche der Spannvorrichtungseinheit (110) ist, und
ein Nadeleinsetzloch (111) an einem Ende in der ersten Richtung der Spannvorrichtungseinheit (110) ausgebildet ist.

3. Gassammelvorrichtung nach Anspruch 2, wobei eine Elektrolytspeichernut (112) an der Innenumfangsfläche der Spannvorrichtungseinheit (110) ausgebildet ist, und
die Elektrolytspeichernut (112) benachbart zu einer Seitenwand angeordnet ist, wo das Nadeleinsetzloch (111) in einem Innenraum der Spannvorrichtungseinheit (110) angeordnet ist.

4. Gassammelvorrichtung nach Anspruch 2, wobei mehrere der Spannvorrichtungseinheiten (110) vorgesehen sind, und
eine zylindrische Batterie (11) in jeder der mehreren Spannvorrichtungseinheiten (110) montiert wird, und
wobei die Gassammelvorrichtung ferner aufweist:
eine Batteriespeichereinheit (710), in der die mehreren Spannvorrichtungseinheiten (110) aufgenommen sind; und
eine Batteriezufuhreinheit (720), die konfiguriert ist, um die mehreren Spannvorrichtungseinheiten (110) nacheinander nacheinander von der Batteriespeichereinheit (710) zu der Schiffseinheit (200) zuzuführen.

5. Gassammelvorrichtung nach Anspruch 4, wobei eine erste zylindrische Batterie (11) in einem Teil der mehreren Spannvorrichtungseinheiten (110) montiert wird, und
eine zweite zylindrische Batterie (11) in einem anderen Teil der mehreren Spannvorrichtungseinheiten (110) montiert wird, und
wobei die erste zylindrische Batterie (11) und die zweite zylindrische Batterie (11) mit unterschiedlichen Außendurchmessern ausgebildet sind, und
die mehreren Spannvorrichtungseinheiten (110) alle mit dem gleichen Außendurchmesser bereitgestellt sind.

6. Gassammelvorrichtung nach Anspruch 4, wobei die Batteriespeichereinheit (710) aufweist:
eine Batteriespeicherbahn (711), in der die mehreren Spannvorrichtungseinheiten (110) in einem ausgerichteten Zustand gespeichert werden;
ein Batterieentladeloch (712), das an einem Ende der Batteriespeicherbahn (711) ausgebildet ist, um die mehreren Spannvorrichtungseinheiten (110) nacheinander auszugeben ; und
eine elastische Tür (713), die an einem Rand eines Einlasses des Batterieentladelochs (712) montiert ist, um mit einer Rückstellkraft zu verhindern, dass die mehreren Spannvorrichtungseinheiten (110) von der Batteriespeichereinheit (710) getrennt werden, und
wobei sich die Schiffseinheit (200) durch die erste Antriebseinheit (400) zwischen einem Außenraum der Kammerkörpereinheit (320) und dem Batterieaufnahmeraum (312) bewegt, und
der Einlass des Batterieentladelochs (712) an einer Stelle vorgesehen ist, die von der Schiffseinheit (200) um einen vorbestimmten Abstand beabstandet ist, um der Schiffseinheit (200) in einem Zustand zugewandt zu sein, in dem sie in dem Außenraum der Kammerkörpereinheit (320) angeordnet ist.

7. Gassammelvorrichtung nach Anspruch 6, wobei die Batteriezufuhreinheit (720) aufweist:
einen Greifer (721), der konfiguriert ist, um eine Spannvorrichtungseinheit (110) zu greifen, die zu dem Batterieentladeloch (712) unter den mehreren Spannvorrichtungseinheiten (110) freiliegt;
ein Drehelement (722), das ein Ende aufweist, an dem der Greifer (721) montiert ist, und das sich in einer zweiten Richtung senkrecht zu der ersten Richtung erstreckt; und
ein Wellenelement (723), das zwischen dem Batterieentladeloch (712) und der Schiffseinheit (200) in dem Zustand angeordnet ist, in dem es in dem Außenraum der Kammerkörpereinheit (320) angeordnet ist, und das sich in der ersten Richtung erstreckt, und
wobei das Wellenelement (723) mit dem Drehelement (722) gekoppelt ist, und
das Drehelement (722) sich relativ zu dem Wellenelement (723) dreht, das als eine Drehwelle dient.

8. Gassammelvorrichtung nach Anspruch 1, wobei die erste Antriebseinheit (400) aufweist:
eine Leistungsübertragungsstange (410), die sich in der ersten Richtung erstreckt und das andere Ende der Kammerkörpereinheit (320) in der ersten Richtung durchdringt, so dass ein Ende in die Kammerkörpereinheit (320) eingesetzt ist;
ein Bewegungselement (420), wobei die Schiffseinheit (200) mit einer Seite des Bewegungselements (420) gekoppelt ist und das eine Ende der Leistungsübertragungsstange (410) mit der anderen Seite des Bewegungselements (420) gekoppelt ist;
einen ersten Befestigungsrahmen (430), an dem die Kammerkörpereinheit (320) befestigt ist;
einen ersten Bewegungsrahmen (440), an dem die Leistungsübertragungsstange (410) befestigt ist und der sich basierend auf dem ersten Befestigungsrahmen (430) linear in der ersten Richtung bewegt;
eine Welle (450), die mit dem ersten Bewegungsrahmen (440) verschraubt ist und mit dem ersten Befestigungsrahmen (430) derart gekoppelt ist, dass sie zum Leerlauf in der Lage ist; und
einen Elektromotor, der konfiguriert ist, um die erste Welle (450) zu drehen.

9. Gassammelvorrichtung nach Anspruch 8, wobei eine Verschlussabdeckung (317), die die Leistungsübertragungsstange (410) umgibt, in der Kammerkörpereinheit (320) vorgesehen ist,
ein Ende der Verschlussabdeckung (317) mit der anderen Seite des Bewegungselements (420) verschmolzen ist, und
das andere Ende der Verschlussabdeckung (317) mit einer Innenwand der anderen Endseite der Kammerkörpereinheit (320) verschmolzen ist.

10. Gassammelvorrichtung nach Anspruch 9, wobei die Verschlussabdeckung (317) in Form eines Balgs vorgesehen ist.

11. Gassammelvorrichtung nach Anspruch 8, wobei die zweite Antriebseinheit (500) aufweist:
einen zweiten Bewegungsrahmen (510), an dem der erste Befestigungsrahmen (430) befestigt ist;
einen zweiten Befestigungsrahmen (520), an dem die Kammerkappeneinheit (320) befestigt ist; und
einen pneumatischen Aktuator (530), der konfiguriert ist, um den zweiten Bewegungsrahmen (510) basierend auf dem zweiten Befestigungsrahmen (520) in der ersten Richtung zu bewegen.

12. Gassammelvorrichtung nach Anspruch 1, ferner aufweisend:
die Drucksensoreinheit, die mit dem Gaszufuhrströmungsweg (600) verbunden ist,
wobei die Drucksensoreinheit konfiguriert ist, um einen Druck des Batterieaufnahmeraums (312) zu messen.

13. Gassammelvorrichtung nach Anspruch 12, ferner aufweisend:
eine Steuerung, die konfiguriert ist, um die erste Antriebseinheit (400) zu steuern,
wobei die Steuerung basierend auf einem Druckmesswert, der von der Drucksensoreinheit ausgegeben wird, gesteuert wird.

14. Gassammelvorrichtung nach Anspruch 13, ferner aufweisend:
einen Verteiler, der in dem Gaszufuhrströmungsweg (600) vorgesehen ist;
einen Verdünnungstank, der mit dem Verteiler durch einen Strömungsweg verbunden ist;
eine Vakuumpumpe, die mit dem Verteiler durch einen Strömungsweg verbunden ist;
ein erstes Ventil, das konfiguriert ist, um einen Strömungsweg, der den Verteiler und die Körpereinheit verbindet, zu öffnen oder zu blockieren;
ein zweites Ventil, das konfiguriert ist, um einen Strömungsweg, der den Verteiler und die Gasanalyseeinheit verbindet, zu öffnen oder zu blockieren;
ein drittes Ventil, das konfiguriert ist, um den Strömungsweg, der den Verteiler und den Verdünnungstank verbindet, zu öffnen oder zu blockieren; und
ein viertes Ventil, das konfiguriert ist, um den Strömungsweg, der den Verteiler und die Vakuumpumpe verbindet, zu öffnen oder zu blockieren,
wobei die Steuerung konfiguriert ist, um das erste Ventil, das zweite Ventil, das dritte Ventil und das vierte Ventil basierend auf einem Signal, das an die Gasanalyseeinheit übertragen wird, zu steuern.

## Revendications

1. Appareil de collecte de gaz, comprenant :
un élément de bâti (110) dans lequel une batterie cylindrique (11) est montée ;
un élément de bateau (200) sur lequel est monté l'élément de bâti (110) dans lequel est montée la batterie cylindrique (11) ;
un élément de corps de chambre (320) pourvu d'un espace de réception de la batterie (312), à l'intérieur duquel est installé l'élément de bateau (200), et possédant une ouverture (311) formée à un bout ;
un élément de couvercle de chambre (320) couplé à l'un bout de l'élément de corps de chambre (320) de sorte qu'un côté couvre l'ouverture (311) ;
une première unité motrice (400) configurée pour déplacer l'élément de bateau (200) dans l'espace de réception de la batterie (312) à travers l'ouverture (311) ;
une deuxième unité motrice (500) configurée pour placer en contact étroit, ou séparer l'un de l'autre, l'élément de corps de chambre (320) et l'un côté de l'élément de couvercle de chambre (320) ; et
un chemin de débit de refoulement de gaz (600) connecté à l'élément de corps de chambre (320) pour apporter le gaz cible d'analyse diffusé dans l'espace de réception de la batterie (312) à un module d'analyse de gaz,
dans lequel, lorsqu'une direction longitudinale de la batterie cylindrique (11) est désignée comme une première direction,
l'élément de corps de chambre (320) se déploie dans la première direction,
l'ouverture (311) est formée à l'un bout de l'élément de corps de chambre (320) dans la première direction,
l'élément de bateau (200) est déplacé de façon linéaire dans la première direction par la première unité motrice (400),
une aiguille de poinçonnage (321) est agencée sur l'un côté de l'élément de couvercle de chambre (320) en un point situé face à la batterie cylindrique (11), et
la première unité motrice (400) déplace l'élément de bateau (200) vers l'élément de couvercle de chambre (320) pour former un orifice perforé dans la batterie cylindrique (11) par l'aiguille de poinçonnage (321).

2. Appareil de collecte de gaz selon la revendication 1, l'élément de bâti (110) étant agencé sous une forme cylindrique s'étendant dans la première direction,
la batterie cylindrique (11) étant montée dans l'élément de bâti (110) afin qu'une surface circonférentielle extérieure de la batterie cylindrique (11) se trouve en contact étroit avec une surface circonférentielle intérieure de l'élément de bâti (110), et
un orifice d'insertion d'une aiguille (111) étant formé à un bout dans la première direction de l'élément de bâti (110).

3. Appareil de collecte de gaz selon la revendication 2, une rainure de rangement d'électrolyte (112) étant formée sur la surface circonférentielle intérieure de l'élément de bâti (110), et
la rainure de rangement de l'électrolyte (112) étant située adjacente à une paroi latérale où l'orifice d'insertion de l'aiguille (111) est situé dans un espace intérieur de l'élément de bâti (110).

4. Appareil de collecte de gaz selon la revendication 2, une pluralité d'éléments de bâti (110) étant agencés, et
une batterie cylindrique (11) étant montée dans chacun de la pluralité d'éléments de bâti (110), et
l'appareil de collecte de gaz comprenant en outre :
une unité de stockage de batterie (710) dans laquelle la pluralité d'éléments de bâti (110) sont installés ; et
un dispositif de distribution de batterie (720) configuré pour distribuer en séquence, un par un, la pluralité d'éléments de bâti (110) de l'unité de stockage de batterie (710) à l'élément de bateau (200).

5. Appareil de collecte de gaz selon la revendication 4, une première batterie cylindrique (11) étant montée dans une partie de la pluralité d'éléments de bâti (110), et
une deuxième batterie cylindrique (11) étant montée dans une autre partie de la pluralité d'éléments de bâti (110), et
la première batterie cylindrique (11) et la deuxième batterie cylindrique (11) étant formées avec différents diamètres extérieurs, et
la pluralité d'éléments de bâti (110) étant tous agencés avec le même diamètre extérieur.

6. Dispositif de collecte de gaz selon la revendication 4, l'unité de stockage de batterie (710) comprenant :
une glissière de stockage de batterie (711) dans laquelle la pluralité d'éléments de bâti (110) sont installés à l'état aligné ;
un orifice de décharge de batterie (712) pratiqué à un bout de la glissière de stockage de batterie (711) pour décharger un à un la pluralité d'éléments de bâti (110) ; et
une porte élastique (713) montée sur un bord d'une entrée de l'orifice de décharge de la batterie (712) pour empêcher la séparation de la pluralité d'éléments de bâti (110) de l'unité de stockage de la batterie (710) avec une force de rappel, et
l'élément de bateau (200) se déplaçant entre un espace extérieur de l'élément de corps de chambre (320) et l'espace de réception de la batterie (312) par la première unité motrice (400), et
l'entrée de l'orifice de décharge de la batterie (712) étant agencée en un point espacé de l'élément de bateau (200) d'une distance prédéterminée afin de faire face à l'élément de bateau (200) de façon à être située dans l'espace extérieur de l'élément de corps de chambre (320).

7. Appareil de collecte de gaz selon la revendication 6, le dispositif de distribution de batterie (720) comprenant :
une pince (721) configurée pour saisir un élément de bâti (110) exposé à l'orifice de décharge de la batterie (712) parmi la pluralité d'éléments de bâti (110) ;
un élément rotatif (722) sur un bout duquel la pince (721) est montée, et s'étendant dans une deuxième direction perpendiculaire à la première direction ; et
un élément d'arbre (723) situé entre l'orifice de décharge de la batterie (712) et l'élément de bateau (200) de façon à être situé dans l'espace extérieur de l'élément de corps de chambre (320) et s'étendant dans la première direction, et
l'élément d'arbre (723) étant couplé à l'élément rotatif (722), et
l'élément rotatif (722) tournant relativement à l'élément d'arbre (723) servant d'arbre de rotation.

8. Appareil de collecte de gaz selon la revendication 1, la première unité motrice (400) comprenant :
une barre de transmission de l'énergie (410) s'étendant dans la première direction et pénétrant l'autre bout de l'élément de corps de chambre (320) dans la première direction, afin qu'un bout soit inséré à l'intérieur de l'élément de corps de chambre (320) ;
un élément mobile (420), l'élément de bateau (200) étant couplé à un côté de l'élément mobile (420) et l'un bout de la barre de transmission de l'énergie (410) étant couplé à l'autre côté de l'élément mobile (420) ;
un premier châssis de fixation (430) sur lequel est fixé l'élément de corps de chambre (320) ;
un premier cadre mobile (440) sur lequel la barre de transmission de force (410) est fixée, et se déplaçant de façon linéaire dans la première direction en fonction du premier châssis de fixation (430) ;
un arbre (450) vissé avec le premier cadre mobile (440) et couplé au premier châssis de fixation (430) pour être en mesure de tourner au ralenti ; et
un moteur électrique configuré pour faire tourner le premier arbre (450).

9. Appareil de collecte de gaz selon la revendication 8, un couvercle d'étanchéité (317) entourant la barre de transmission de force (410) étant agencé à l'intérieur de l'élément de corps de chambre (320),
un bout du couvercle d'étanchéité (317) étant fusionné avec l'autre côté de l'élément mobile (420), et
l'autre bout du couvercle d'étanchéité (317) étant fusionné avec une paroi intérieure de l'autre côté terminal de l'élément de corps de chambre (320).

10. Appareil de collecte de gaz selon la revendication 9, le couvercle d'étanchéité (317) étant agencé sous forme de soufflet.

11. Appareil de collecte de gaz selon la revendication 8, la deuxième unité motrice (500) comprenant :
un deuxième cadre mobile (510) sur lequel est fixé le premier châssis de fixation (430) ;
un deuxième châssis de fixation (520) sur lequel est fixé l'élément de couvercle de chambre (320) ; et
un actionneur pneumatique (530) configuré pour déplacer le deuxième cadre mobile (510) dans la première direction d'après le deuxième châssis de fixation (520).

12. Appareil de collecte de gaz selon la revendication 1, comprenant en outre :
l'unité de capteur de pression connectée au chemin de débit de refoulement du gaz (600),
l'unité de capteur de pression étant configurée pour mesurer une pression de l'espace de réception de la batterie (312).

13. Appareil de collecte de gaz selon la revendication 12, comprenant en outre :
une commande configurée pour commander la première unité motrice (400),
la commande étant contrôlée d'après une valeur mesurée de la pression émise par l'unité de capteur de pression.

14. Appareil de collecte de gaz selon la revendication 13, comprenant en outre :
un collecteur agencé dans le chemin de débit de refoulement du gaz (600) ;
un réservoir de dilution relié au collecteur par un chemin de débit ;
une pompe à vide reliée au collecteur par un chemin de débit ;
une première vanne configurée pour ouvrir ou bloquer un chemin de débit reliant le collecteur et l'unité de corps ;
une deuxième vanne configurée pour ouvrir ou bloquer un chemin de débit reliant le collecteur et le module d'analyse du gaz ;
une troisième vanne configurée pour ouvrir ou bloquer le chemin de débit reliant le collecteur et le réservoir de dilution ; et
une quatrième vanne configurée pour ouvrir ou bloquer le chemin de débit reliant le collecteur et la pompe de vide ;
la commande étant configurée pour gérer la première vanne, la deuxième vanne, la troisième vanne et la quatrième vanne d'après un signal transmis à l'unité d'analyse de gaz.
